# EUROPEAN PATENT APPLICATION

(11) **EP 4 718 619 A1**
(43) Date of publication of application: **01.04.2026**
(21) Application number: 24922546.7
(22) Date of filing: 04.11.2024
(51) Int. Cl.: H01M 50/509, H01M 10/658, H01M 50/213, H01M 50/284, H01M 50/264, H01M 50/258, H01M 50/249

(54) **BATTERY PACK, AND ELECTRIC BICYCLE AND VEHICLE INCLUDING SAME**

(30) Priority: 29.01.2024 KR 20240013432
(71) Applicant: LG Energy Solution, Ltd., Seoul 07335 (KR)
(72) Inventor: YOO, Dong-Won, Daejeon 34122 (KR)
(74) Representative: Plasseraud IP
(86) International application number: PCT/KR2024/017212
(87) International publication number: WO 2025/164883

(57) **Abstract**

Disclosed is a battery pack, and an electric bicycle and a vehicle including the same. The battery pack includes a plurality of battery modules having a plurality of cylindrical battery cells; a pack case configured to accommodate the plurality of battery modules; and a flame propagation prevention member arranged between a first battery module among the plurality of battery modules and a second battery module adjacent to the first battery module to prevent propagation of a flame generated from any one battery module, wherein the flame propagation prevention member is configured to electrically connect the first battery module and the second battery module.

## Description

### TECHNICAL FIELD

This application is based on and claims priority from Korean Patent Application No. 10-2024-0013432, filed on January 29, 2024, with the Korean Intellectual Property Office, the disclosure of which is incorporated herein in its entirety by reference.

The present disclosure relates to a battery pack, and an electric bicycle and a vehicle including the same, and more specifically, to a battery pack capable of preventing flame propagation between battery modules, and an electric bicycle and a vehicle including the same.

### BACKGROUND ART

In general, a secondary battery refers to a battery that can be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as the battery cell is applied to devices requiring high output voltage and large charging capacity, such as electric vehicles or ESS (Energy Storage Systems), a battery module configured by connecting a plurality of battery cells in series, parallel, or a combination of series and parallel, and a battery pack configured by connecting such battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

That is, if a flame generated from any battery module spreads to neighboring battery modules, there is a problem in that the battery module or battery pack may be damaged, burned out, or explode due to a chain reaction of flames, which makes it difficult to secure the stability of the battery module or battery pack.

### DISCLOSURE

### Technical Problem

Therefore, the present disclosure is directed to providing a battery pack capable of preventing a flame generated in any one battery module from spreading to other battery modules, and an electric bicycle and a vehicle including the same.

In addition, the present disclosure is directed to providing a battery pack capable of preventing a chain thermal runaway of a battery module or a battery pack due to a flame, and an electric bicycle and a vehicle including the same.

In addition, the present disclosure is directed to providing a battery pack having a simple assembly structure and allowing simple electrical connection of battery modules, and an electric bicycle and a vehicle including the same.

In addition, the present disclosure is directed to providing a battery pack capable of reducing the manufacturing process and saving costs, and an electric bicycle and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery pack comprising: a plurality of battery modules having a plurality of cylindrical battery cells; a pack case configured to accommodate the plurality of battery modules; and a flame propagation prevention member arranged between a first battery module among the plurality of battery modules and a second battery module adjacent to the first battery module to prevent propagation of a flame generated from any one battery module, wherein the flame propagation prevention member is configured to electrically connect the first battery module and the second battery module.

In an embodiment, the flame propagation prevention member may include a printed circuit board (PCB) on which an electric circuit is formed; and an electric connection pin connected to the printed circuit board and configured to contact the first battery module and the second battery module, respectively.

In an embodiment, the printed circuit board may be made of FR-4 material in which glass fibers impregnated with an epoxy resin are piled up in multiple layers.

In an embodiment, the battery module may include a module case having a plurality of insert holes formed therein so that the cylindrical battery cells are inserted, and the plurality of cylindrical battery cells may be inserted into the insert holes of the module case and connected in parallel.

In an embodiment, four cylindrical battery cells may be inserted into one module case.

In an embodiment, the printed circuit board may be designed so that the first battery module and the second battery module are connected in series.

In an embodiment, the plurality of battery modules may be coupled to each other in a straight line shape in a longitudinal direction.

In an embodiment, a first through hole may be formed at a center of the module case, a second through hole may be formed at a center of the flame propagation prevention member, and the battery pack may further comprise a fixing member formed to pass through the first through hole and the second through hole to connect and fix the plurality of battery modules.

In an embodiment, the fixing member may include a rod configured to pass through the first through hole and the second through hole and having a thread formed thereon; and a nut coupled to the rod.

In an embodiment, a coupling groove or a coupling protrusion may be formed on the module case so that the plurality of battery modules are coupled to each other.

In an embodiment, the printed circuit board may have unit support portions in a number corresponding to the number of cylindrical battery cells.

In an embodiment, the unit support portion may correspond to a negative electrode or a positive electrode of the cylindrical battery cell, and the electric connection pin may be coupled to the unit support portion.

In an embodiment, the electric connection pin may include a first pin protruding upward from the printed circuit board; and a second pin protruding downward from the printed circuit board, and the first pin and the second pin may be formed symmetrically based on the printed circuit board.

In an embodiment, the cylindrical battery cell or the flame propagation prevention member may be configured to be replaceable.

Meanwhile, according to another aspect of the present disclosure, there may be provided an electric bicycle including the battery pack described above, and there may be provided a vehicle including the battery pack described above.

### Advantageous Effects

The embodiments of the present disclosure have the effect of preventing a flame generated in any one battery module from spreading to other battery modules.

In addition, there is an effect of preventing a chain thermal runaway of a battery module or a battery pack due to a flame.

In addition, there is an effect of having a simple assembly structure and allowing simple electrical connection of battery modules.

In addition, there is an effect of reducing the manufacturing process and saving costs.

However, the effects that can be obtained through the present disclosure are not limited to the above, and other effects not mentioned herein will be clearly understood by those skilled in the art from the following description.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing that a plurality of battery modules included in a battery pack according to an embodiment of the present disclosure are connected.
FIG. 2 is an exploded perspective view of FIG. 1.
FIG. 3 is a drawing showing a flame propagation prevention member positioned between a first battery module and a second battery module adjacent to the first battery module among the plurality of battery modules included in the battery pack according to an embodiment of the present disclosure.
FIG. 4 is an exploded perspective view of FIG. 3.
FIG. 5 is a drawing showing a coupling groove or a coupling protrusion in the plurality of battery modules included in the battery pack according to an embodiment of the present disclosure.
FIG. 6 is a perspective view showing a flame propagation prevention member of the plurality of battery modules included in the battery pack according to an embodiment of the present disclosure.
FIG. 7 is a horizontal side view showing the flame propagation prevention member of FIG. 6.
FIG. 8 is a perspective view showing that the plurality of battery modules are arranged in a pack case of the battery pack according to an embodiment of the present disclosure.
FIG. 9 is a drawing for illustrating an electric bicycle including the battery pack according to an embodiment of the present disclosure.
FIG. 10 is a drawing for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

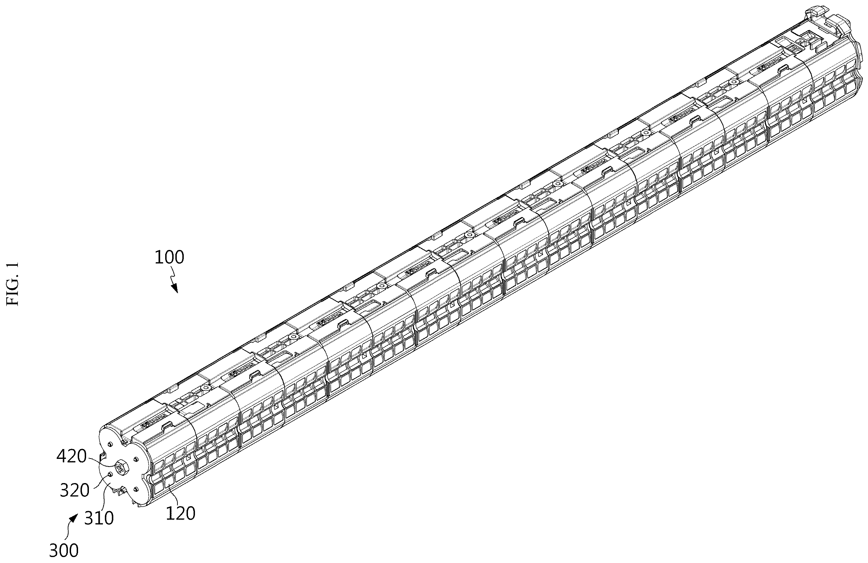

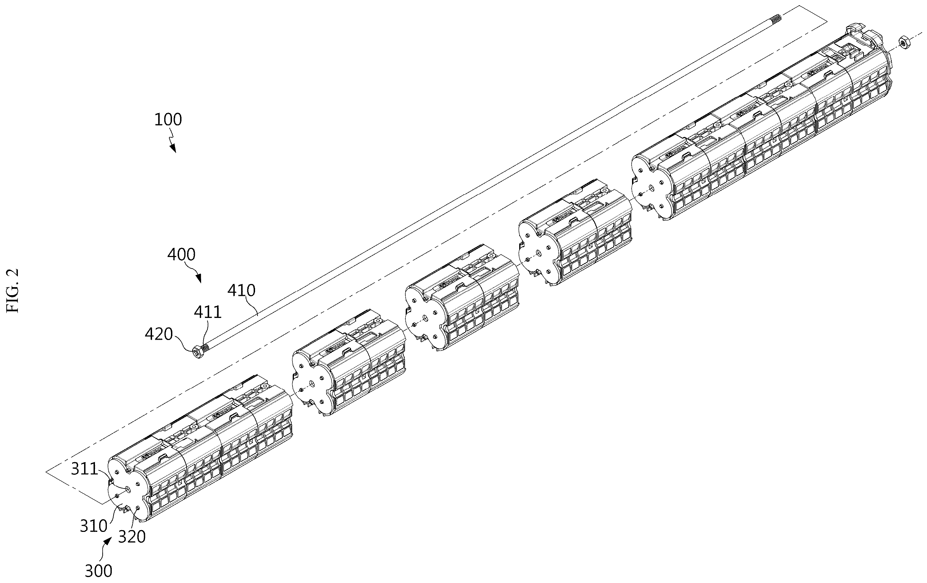

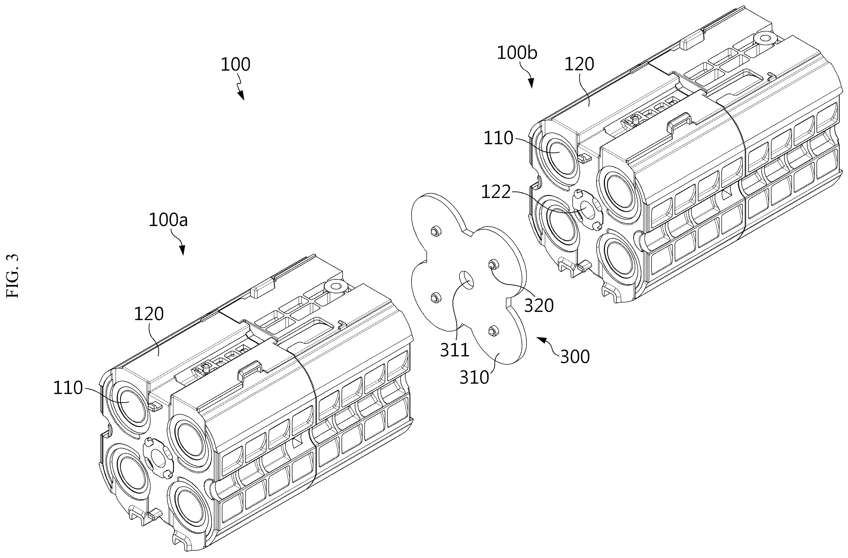

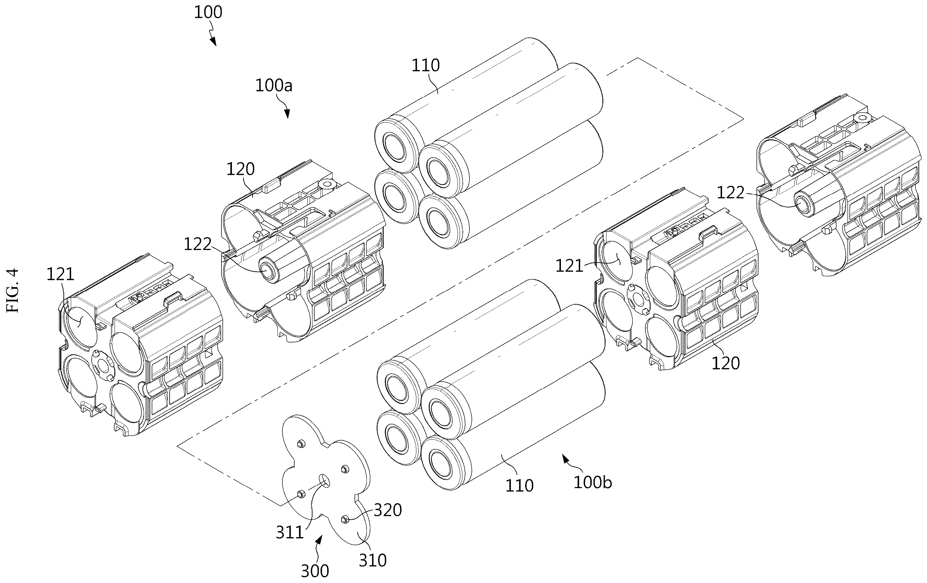

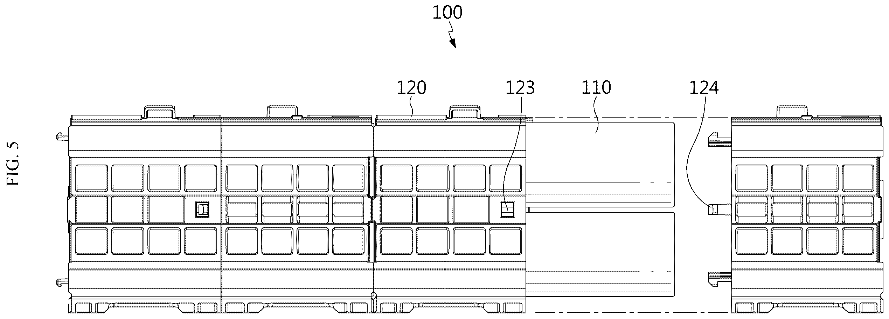

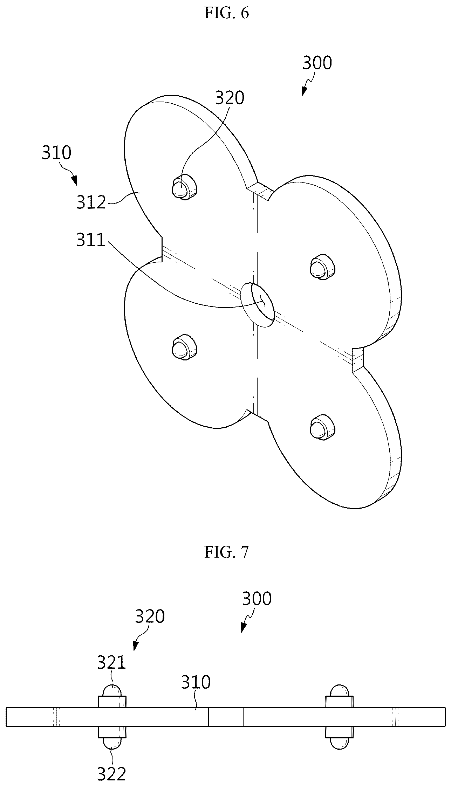

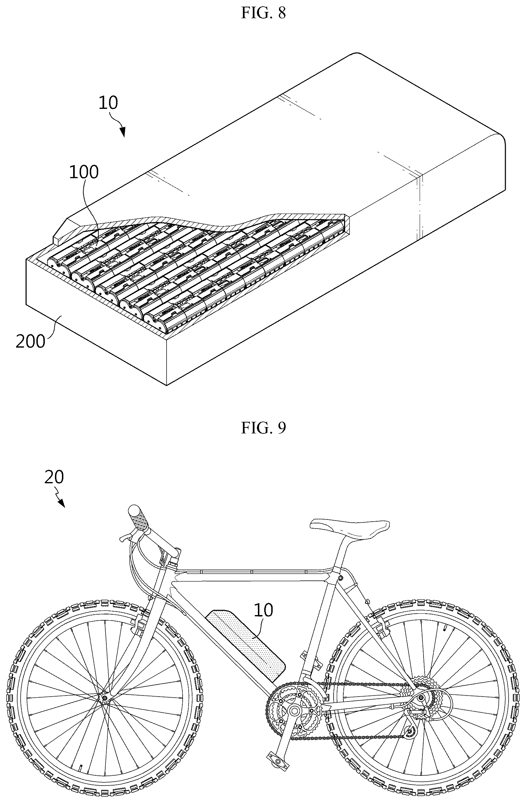

FIG. 1 is a perspective view showing that a plurality of battery modules included in a battery pack according to an embodiment of the present disclosure are connected, FIG. 2 is an exploded perspective view of FIG. 1, FIG. 3 is a drawing showing a flame propagation prevention member positioned between a first battery module and a second battery module adjacent to the first battery module among the plurality of battery modules included in the battery pack according to an embodiment of the present disclosure, FIG. 4 is an exploded perspective view of FIG. 3, FIG. 5 is a drawing showing a coupling groove or a coupling protrusion in the plurality of battery modules included in the battery pack according to an embodiment of the present disclosure, FIG. 6 is a perspective view showing a flame propagation prevention member of the plurality of battery modules included in the battery pack according to an embodiment of the present disclosure, FIG. 7 is a horizontal side view showing the flame propagation prevention member of FIG. 6, and FIG. 8 is a perspective view showing that the plurality of battery modules are arranged in a pack case of the battery pack according to an embodiment of the present disclosure.

Referring to the drawings, the battery pack 10 according to an embodiment of the present disclosure includes a battery module 100, a pack case 200 (see FIG. 8), and a flame propagation prevention member 300.

The battery module 100 is provided in plurality, and each of the plurality of battery modules 100a, 100b has a plurality of cylindrical battery cells 110. Here, the cylindrical battery cell 110 may include an electrode assembly, a battery can, and a cap plate.

The electrode assembly has a structure in which a positive electrode plate, a negative electrode plate, and a separator interposed between the positive electrode plate and the negative electrode plate are wound in one direction. In addition, the electrode assembly may have a center hole formed at the center thereof, and may be formed in a jelly-roll type.

For example, the electrode assembly may be manufactured by winding a stack formed by sequentially stacking a negative electrode plate, a separator, a positive electrode plate, and a separator at least once. Here, the positive electrode plate and the negative electrode plate may be formed in a sheet shape.

That is, the electrode assembly applied to this embodiment may be a winding-type electrode assembly. In this case, an additional separator may be provided on the outer surface of the electrode assembly for insulation from the battery can. That is, the electrode assembly may have a wound structure well known in the art without limitation.

The positive electrode plate may have a positive electrode active material applied to one or both surfaces thereof, and a first uncoated portion may be formed at an end of the positive electrode plate on which the positive electrode active material is not applied. The first uncoated portion may be exposed to the outside of the separator while forming a plurality of winding turns based on the center of the electrode assembly, and may be used as an electrode tab by itself. However, it is also possible that the first uncoated portion is not formed on the positive electrode plate.

The negative electrode plate may have a negative electrode active material applied to one or both surfaces thereof, and a second uncoated portion may be formed at an end of the negative electrode plate on which the negative electrode active material is not applied. The second uncoated portion may be exposed to the outside of the separator while forming a plurality of winding turns based on the center of the electrode assembly, and may be used as an electrode tab by itself. However, it is also possible that the second uncoated portion is not formed on the negative electrode plate.

Here, when the positive electrode plate and the negative electrode plate each include an uncoated portion, the first uncoated portion and the second uncoated portion may be configured to face opposite directions.

In addition, the positive electrode active material coated on the positive electrode plate and the negative electrode active material coated on the negative electrode plate may be used without limitation as long as they are active materials known in the art.

The separator may use a porous polymer film, for example, a porous polymer film made of a polyolefin polymer such as an ethylene homopolymer, a propylene homopolymer, an ethylene/butene copolymer, an ethylene/hexene copolymer, an ethylene/methacrylate copolymer, etc., alone or in combination.

As another example, the separator may use a common porous nonwoven fabric, such as a nonwoven fabric made of high-melting-point glass fiber, polyethylene terephthalate fiber, etc.

At least one surface of the separator may include a coating layer of inorganic particles. It is also possible that the separator itself is formed as a coating layer of inorganic particles. The particles forming the coating layer may have a structure in which they are coupled with a binder so that an interstitial volume exists between adjacent particles.

In addition, the center hole of the electrode assembly is also used for welding the cell terminal (positive electrode terminal) and the positive electrode current collection plate. That is, the cell terminal and the positive electrode current collection plate may be welded by irradiating a laser through the center hole of the electrode assembly.

The electrode assembly is accommodated in the battery can. In addition, a through hole may be formed in the battery can. Here, the battery can is formed in a cylindrical shape so that the electrode assembly is accommodated inside the battery can, and the battery can may be electrically connected to the negative electrode plate of the electrode assembly. Accordingly, the battery can may have the same polarity as the negative electrode plate, i.e., a negative polarity.

The diameter of the battery can is larger than the diameter of the electrode assembly. A gap of a preset size may be formed between the battery can and the positive electrode current collection plate, and an insulator may be interposed in the gap.

If the size of the electrode assembly is increased while the size of the battery can is determined according to the standard, the total capacity of the cylindrical battery cell 110 increases, but the gap between the battery can and the electrode assembly decreases.

That is, when the size of the electrode assembly is increased to increase the overall capacity of the cylindrical battery cell 110, the gap between the battery can and the electrode assembly decreases. Therefore, in order to increase the capacity of the cylindrical battery cell 110, an insulator must be able to be interposed in the reduced gap between the battery can and the electrode assembly. To this end, it is desirable that the insulator has as smaller thickness as possible.

The battery can is a roughly cylindrical receiver and may be made of a conductive material such as metal. The material of the battery can may be made of a conductive metal such as aluminum, steel, stainless steel, etc., but is not limited thereto.

The positive electrode current collection plate is electrically connected to the positive electrode plate, and, for example, is connected to the positive electrode plate at the top of the electrode assembly. For example, the positive electrode current collection plate is made of a conductive metal material and may be electrically connected to the first uncoated portion of the positive electrode plate.

The cell terminal is made of a conductive metal material and is electrically connected to the positive electrode current collection plate. In addition, the cell terminal is electrically connected to the positive electrode plate of the electrode assembly through the positive electrode current collection plate, thereby having a positive polarity.

That is, the cell terminal may function as a positive electrode terminal. Also, the battery can is electrically connected to the negative electrode plate of the electrode assembly as described above, thereby having a negative polarity.

The negative electrode current collection plate is electrically connected to the negative electrode plate, and for example, is connected to the negative electrode plate at the bottom of the electrode assembly. For example, the negative electrode current collection plate is made of a conductive metal material such as aluminum, steel, copper, nickel, etc., and may be electrically connected to the second uncoated portion of the negative electrode plate.

The negative electrode current collection plate may be electrically connected to the battery can. For this purpose, at least a part of an edge portion of the negative electrode current collection plate may be interposed and fixed between the inner surface of the battery can and the sealing gasket.

In one embodiment, at least a part of the edge portion of the negative electrode current collection plate may be fixed to the beading portion by welding in a state of being supported on the bottom surface of the beading portion formed at the lower end of the battery can.

In addition, at least a part of the remaining portion of the negative electrode current collection plate, excluding the coupling portion of the beading portion, may be coupled to the folded surface of the second uncoated portion by welding, for example, laser welding.

Also, at least a part of an edge of the negative electrode current collection plate may be electrically coupled to one of the upper surface and the lower surface of the beading portion, which is adjacent to the crimping portion.

The cap plate is configured to seal the opening formed at the bottom of the battery can. The cap plate may be made of, for example, a metal material to ensure rigidity.

In addition, the cap plate may be provided as nonpolar by being separated from the electrode assembly. That is, the cap plate may not have polarity even if it is made of a conductive metal material.

The non-polarity of the cap plate means that the cap plate is electrically insulated from the battery can and the cell terminal. Likewise, the cap plate may not have polarity, and its material does not necessarily have to be a conductive metal.

The cap plate may be seated on and supported by the beading portion formed on the battery can. In addition, the cap plate is fixed by the crimping portion, explained later. A sealing gasket may be interposed between the cap plate and the crimping portion of the battery can to ensure airtightness of the battery can. That is, the sealing gasket may be arranged to be interposed between the edge of the cap plate and the opening of the battery can.

Referring to FIG. 3, the battery module 100 may include a module case 120, and a plurality of cylindrical battery cells 110 are arranged inside the module case 120. For example, referring to FIG. 4, a plurality of insert holes 121 may be formed in the module case 120, and the plurality of cylindrical battery cells 110 are inserted into the plurality of insert holes 121, respectively.

Referring to FIGS. 3 and 4, four cylindrical battery cells 110 are inserted into one module case 120, and the four cylindrical battery cells 110 are connected in parallel. However, the number of cylindrical battery cells 110 may be more than four.

Referring to FIG. 1, the plurality of battery modules 100 may be coupled to each other in a straight line shape in a longitudinal direction. Also, as in FIG. 8, the plurality of battery modules 100 coupled to each other are disposed in the pack case 200.

The fixing member 400 may connect and fix the plurality of battery modules 100 by passing through the first through hole 122 and the second through hole 311.

That is, referring to FIG. 3, a first through hole 122 through which a fixing member 400 passes may be formed at the center of the module case 120 so that the plurality of battery modules 100 may be formed long in a straight shape and fixed, and a second through hole 311 may be formed at the center of the flame propagation prevention member 300.

The fixing member 400 may connect and fix the plurality of battery modules 100 in various ways, and for this purpose, for example, the fixing member 400 may include a rod 410 and a nut 420.

Referring to FIG. 2, the rod 410 passes through the first through hole 122 (see FIG. 3) and the second through hole 311. Also, the thread 411 may be formed on the rod 410. The thread 411 may be formed only at one end of the rod 410, or may be formed at both ends of the rod 410, or may also be formed on the entire rod 410.

The nut 420 is coupled and fastened to the thread 411 of the rod 410 and fixes the plurality of battery modules 100 connected to each other.

Referring to FIG. 5, a coupling groove 123 or a coupling protrusion 124 may be formed on the module case 120, and the plurality of battery modules 100 may be coupled to each other by the coupling groove 123 or the coupling protrusion 124.

For example, only the fixing member 400 may be provided to connect the plurality of battery modules 100. Alternatively, only the coupling groove 123 or the coupling protrusion 124 may be formed on the module case 120 without the fixing member 400. Alternatively, not only the fixing member 400 may be provided, but also the coupling groove 123 or the coupling protrusion 124 may be formed on the module case 120.

In the case of the battery module 100 equipped with a conventional cylindrical battery cell 110, the cylindrical battery cells 110 are electrically connected by welding. In this case, if a problem occurs in any one cylindrical battery cell 110, it is impossible to replace only the cylindrical battery cell with the problem, so the entire battery module 100 is discarded.

However, since the battery pack 10 according to an embodiment of the present disclosure electrically connects the cylindrical battery cell 110 by the flame propagation prevention member 300 without welding, the cylindrical battery cell 110 or the flame propagation prevention member 300 is configured to be replaceable. Accordingly, only the cylindrical battery cell 110 or the flame propagation prevention member 300 in which a problem has occurred may be replaced, and it may be unnecessary to replace the entire battery module 100.

That is, in the case of the fixing member 400, the nut 420 may be loosened to replace the cylindrical battery cell 110 or the flame propagation prevention member 300. In addition, the battery module 100 in which the coupling groove 123 or the coupling protrusion 124 is formed may also be easily separated to replace the cylindrical battery cell 110 or the flame propagation prevention member 300.

Accordingly, there is an effect of reducing waste of resources and saving costs.

Referring to FIG. 8, the plurality of battery modules 100 are accommodated in the pack case 200. Here, the pack case 200 may further include various devices for controlling charging and discharging of the cylindrical battery cells 110 included in the battery modules 100, such as a BMS, a current sensor, and a fuse.

Referring to FIG. 3, the flame propagation prevention member 300 is disposed between a first battery module 100a among a plurality of battery modules 100 and a second battery module 100b adjacent to the first battery module 100a. Here, the flame propagation prevention member 300 prevents the propagation of a flame generated from any one battery module 100.

For example, if a flame occurs in the first battery module 100a, the flame is prevented from spreading from the first battery module 100a to the second battery module 100b, thereby preventing a chain ignition in the batteries.

In addition, the flame propagation prevention member 300 is configured to contact each cylindrical battery cell 110 and electrically connect the first battery module 100a and the second battery module 100b. That is, the flame propagation prevention member 300 not only has a function of preventing flame propagation between the battery modules 100, but also has a function of electrically connecting the plurality of battery modules 100 to each other.

Referring to FIG. 3, the flame propagation prevention member 300 includes a printed circuit board (PCB) 310 and an electric connection pin 320.

An electric circuit is formed on the printed circuit board 310. Here, the printed circuit board 310 may be designed so that the first battery module 100a and the second battery module 100b are connected in series.

For example, the first battery module 100a including a plurality of cylindrical battery cells 110 connected in parallel and the second battery module 100b including a plurality of cylindrical battery cells 110 connected in parallel may be connected in series.

That is, the plurality of cylindrical battery cells 110 arranged in one battery module 100 are connected in parallel, but the plurality of battery modules 100 may be connected in series by the printed circuit board 310.

The printed circuit board 310 may be made of FR-4 material in which glass fibers impregnated with an epoxy resin are piled up in multiple layers. FR-4 has good heat resistance due to its high glass transition temperature, and therefore, the printed circuit board 310 made of the FR-4 material may prevent the propagation of a flame generated from any one battery module 100.

Referring to FIG. 6, the printed circuit board 310 may have unit support portions 312 formed in a number corresponding to the number of cylindrical battery cells 110. For example, if one battery module 100 includes four cylindrical battery cells 110, the number of unit support portions 312 of the printed circuit board 310 may also be four.

Here, the unit support portion 312 corresponds to the negative electrode or the positive electrode of the cylindrical battery cell 110, and an electric connection pin 320 may be coupled to the unit support portion 312. Also, the electric connection pin 320 coupled to the unit support portion 312 contacts the negative electrode or the positive electrode of the cylindrical battery cell 110 to electrically connect the plurality of cylindrical battery cells 110.

Referring to FIGS. 3 and 4, the electric connection pin 320 is coupled to the printed circuit board 310 and contacts the first battery module 100a and the second battery module 100b, respectively.

Referring to FIG. 7, the electric connection pin 320 may be configured to include a first pin 321 and a second pin 322. The first pin 321 protrudes upward from the printed circuit board 310 based on FIG. 7. Also, the second pin 322 protrudes downward from the printed circuit board 310 based on FIG. 7.

In addition, the first pin 321 may be in contact with the cylindrical battery cell 110 of the first battery module 100a, and the second pin 322 may be in contact with the cylindrical battery cell 110 of the second battery module 100b. As in FIG. 7, the first pin 321 and the second pin 322 may be formed symmetrically with respect to the printed circuit board 310, but are not limited thereto.

FIG. 9 is a drawing for illustrating an electric bicycle including the battery pack according to an embodiment of the present disclosure.

Referring to FIG. 9, the electric bicycle 20 according to an embodiment of the present disclosure may include one or more battery packs 10 according to each embodiment of the present disclosure described above.

Here, the electric bicycle 20 includes all means of transportation that are commonly known as bicycles, in which a driving unit (e.g., a motor) is coupled, and operates by receiving power from the battery pack 10. That is, the electric bicycle 20 includes a motorcycle including the aforementioned battery pack 10.

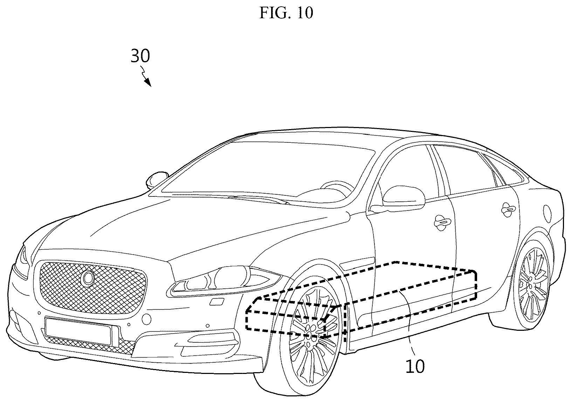

FIG. 10 is a drawing for illustrating a vehicle including the battery pack according to an embodiment of the present disclosure.

Referring to FIG. 10, a vehicle 30 according to an embodiment of the present disclosure may include one or more battery packs 10 according to each embodiment of the present disclosure described above.

Here, the vehicle 30 includes, for example, various types of vehicles that are designed to use electricity, such as electric vehicles or hybrid electric vehicles.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery pack, and an electric bicycle and a vehicle including the same, and is particularly applicable to industries related to secondary batteries.

## Claims

1. A battery pack comprising:
a plurality of battery modules having a plurality of cylindrical battery cells;
a pack case configured to accommodate the plurality of battery modules; and
a flame propagation prevention member arranged between a first battery module among the plurality of battery modules and a second battery module adjacent to the first battery module to prevent propagation of a flame generated from any one battery module,
wherein the flame propagation prevention member is configured to electrically connect the first battery module and the second battery module.

2. The battery pack according to claim 1,
wherein the flame propagation prevention member includes:
a printed circuit board (PCB) on which an electric circuit is formed; and
an electric connection pin connected to the printed circuit board and configured to contact the first battery module and the second battery module, respectively.

3. The battery pack according to claim 2,
wherein the printed circuit board is made of FR-4 material in which glass fibers impregnated with an epoxy resin are piled up in multiple layers.

4. The battery pack according to claim 2,
wherein the battery module includes a module case having a plurality of insert holes formed therein so that the cylindrical battery cells are inserted, and
wherein the plurality of cylindrical battery cells are inserted into the insert holes of the module case and connected in parallel.

5. The battery pack according to claim 4,
wherein four cylindrical battery cells are inserted into one module case.

6. The battery pack according to claim 4,
wherein the printed circuit board is designed so that the first battery module and the second battery module are connected in series.

7. The battery pack according to claim 4,
wherein the plurality of battery modules are coupled to each other in a straight line shape in a longitudinal direction.

8. The battery pack according to claim 7,
wherein a first through hole is formed at a center of the module case, and a second through hole is formed at a center of the flame propagation prevention member, and
wherein the battery pack further comprises a fixing member formed to pass through the first through hole and the second through hole to connect and fix the plurality of battery modules.

9. The battery pack according to claim 8,
wherein the fixing member includes:
a rod configured to pass through the first through hole and the second through hole and having a thread formed thereon; and
a nut coupled to the rod.

10. The battery pack according to claim 7,
wherein a coupling groove or a coupling protrusion is formed on the module case so that the plurality of battery modules are coupled to each other.

11. The battery pack according to claim 2,
wherein the printed circuit board has unit support portions in a number corresponding to the number of cylindrical battery cells.

12. The battery pack according to claim 11,
wherein the unit support portion corresponds to a negative electrode or a positive electrode of the cylindrical battery cell, and the electric connection pin is coupled to the unit support portion.

13. The battery pack according to claim 2,
wherein the electric connection pin includes:
a first pin protruding upward from the printed circuit board; and
a second pin protruding downward from the printed circuit board,
wherein the first pin and the second pin are formed symmetrically based on the printed circuit board.

14. The battery pack according to claim 1,
wherein the cylindrical battery cell or the flame propagation prevention member is configured to be replaceable.

15. An electric bicycle comprising the battery pack according to any one of claims 1 to 14.

16. A vehicle comprising the battery pack according to any one of claims 1 to 14.
